# EUROPÄISCHE PATENTANMELDUNG

(11) **EP 2 660 404 A2**
(43) Veröffentlichungstag der Anmeldung: **06.11.2013**
(21) Anmeldenummer: 13401046.1
(22) Anmeldetag: 02.05.2013
(51) Int. Cl.: E04B 1/76, F16B 13/12, F16B 13/00

(54) **Verfahren zum Befestigen einer Dämmstoffplatte an einem Verankerungsgrund**

(30) Priorität: 04.05.2012 DE 102012103909; 20.03.2013 DE 102013102845
(71) Anmelder: fischerwerke GmbH & Co. KG, 72178 Waldachtal (DE)
(72) Erfinder: Hoffmann, Adolf, 71131 Jettingen (DE); Renz, Jürgen, 72202 Nagold (DE)

(57) **Zusammenfassung**

Die Erfindung betrifft ein Verfahren zum Befestigen einer Dämmstoffplatte (3) an einem Verankerungsgrund (1) mit einem Dämmstoffdübel (7). Um zu überprüfen, ob der Dämmstoffdübel (7) planmäßig im Verankerungsgrund (1) verankert ist, schlägt die Erfindung vor, dass eine axiale Druckkraft (D) als Prüflast auf den gesetzten Dämmstoffdübel (7) aufgebracht wird, derart, dass die Druckkraft (D) bei planmäßiger Verankerung des Dämmstoffdübels (7) im Verankerungsgrund (1) vom Spreizabschnitt (8) auf den Verankerungsgrund (1) übertragen wird, im Wesentlichen ohne dass sich der Spreizabschnitt (8) in axialer Richtung bewegt.

## Beschreibung

Die Erfindung betrifft ein Verfahren zum Befestigen einer Dämmstoffplatte an einem Verankerungsgrund mit den Merkmalen des Oberbegriffs des Anspruchs 1.

Ein derartiges Verfahren ist aus der Offenlegungsschrift DE 10 2009 006 769 A1 bekannt. Die Offenlegungsschrift zeigt das Befestigen einer Dämmstoffplatte an einem Verankerungsgrund mit einem Dämmstoffdübel. Bei der Dämmstoffplatte handelt es sich beispielsweise um eine Platte aus extrudiertem Polystyrol, die an einer Betonwand eines Gebäudes zu befestigen ist, wobei die Betonwand den Verankerungsgrund darstellt. Der Dämmstoffdübel ist mit einem als wendelförmiges Dämmstoffgewinde ausgeführten Halteabschnitt ausgestaltet, der beim Einbringen in die Dämmstoffplatte einen Gewindegang in den Dämmstoff schneidet. Zudem weist der Dämmstoffdübel einen Spreizabschnitt auf, der durch das Eintreiben einer Schraube radial aufgespreizt und in einem Bohrloch verspannt werden kann. Zum Befestigen der Dämmstoffplatte wird durch die Dämmstoffplatte hindurch in dem Verankerungsgrund ein Bohrloch erstellt. In die dabei in der Dämmstoffplatte entstandene Durchgangsbohrung wird der Dämmstoffdübel eingebracht, so weit, bis der Spreizabschnitt im Bohrloch liegt. Beim Einbringen wird mit dem Dämmstoffgewinde ein Gewindegang in die Dämmstoffplatte geschnitten. Sobald der Spreizbereich des Dämmstoffdübels vollständig im Bohrloch liegt, wird die Schraube in den Spreizbereich eingetrieben, wodurch dieser radial aufgespreizt und gegen die Wand des Bohrlochs gepresst und verankert wird, so dass Kräfte vom planmäßig gesetzten Dämmstoffdübel in den Verankerungsgrund eingetragen werden können. Insbesondere dann, wenn der Verankerungsgrund aus einem relativ weichen und/oder einem Baustoff mit Hohlkammern besteht, kann es vorkommen, dass es im Bereich des Bohrlochmunds zu Abplatzungen kommt, so dass das Bohrloch in diesem Bereich einen zu großen Durchmesser aufweist. Der Spreizbereich des Dämmstoffdübels kann in einem derartigen Bohrloch zwar aufgespreizt werden, weshalb ein Anwender meint, dass der Dämmstoffdübel planmäßig verankert sei, axiale Kräfte können aber nicht in ausreichender Größe zwischen Bohrlochwand und Spreizbereich übertragen werden.

Aufgabe der Erfindung ist daher, ein Verfahren zum Befestigen einer Dämmstoffplatte vorzuschlagen, mit dem auf einfache Weise festgestellt werden kann, ob der Dämmstoffdübel planmäßig verankert ist.

Diese Aufgabe wird erfindungsgemäß durch ein Verfahren mit den Merkmalen des Anspruchs 1 gelöst. Mit dem erfindungsgemäßen Verfahren wird eine Dämmstoffplatte mittels eines Dämmstoffdübels an einem Verankerungsgrund befestigt. Der Verankerungsgrund ist beispielsweise eine Wand eines Gebäudes, an der die Dämmstoffplatte für ein Wärmedämmverbundsystem zu befestigen ist. Bei der Dämmstoffplatte handelt es sich insbesondere um eine Platte aus extrudiertem Polystyrol, wobei die Erfindung nicht auf diesen Dämmstoff beschränkt ist. Grundsätzlich kann das erfindungsgemäße Verfahren auch mit Holzfaserdämmplatten, Stein- oder Glaswollplatten und weiteren Dämmstoffen durchgeführt werden. Der im Verfahren verwendete Dämmstoffdübel weist einen Spreizabschnitt auf, mit dem der Dämmstoffdübel in einem Bohrloch im Verankerungsgrund verankert werden kann. Zum Verankern wird in den Spreizabschnitt ein Spreizelement eingetrieben, wobei das Spreizelement insbesondere eine Schraube ist. Zudem umfasst der Dämmstoffdübel einen Halteabschnitt zum Halten der Dämmstoffplatte. Der Halteabschnitt kann beispielsweise als ebener Dämmstoffteller ausgeführt sein. Weitere Ausgestaltungsformen sind ebenso möglich, sofern sie geeignet sind, die Dämmstoffplatte zu halten. Das erfindungsgemäße Verfahren umfasst folgende Schritte:
1.) Bohren eines Bohrlochs in den Verankerungsgrund;
2.) Einbringen des Spreizabschnitts in das Bohrloch; und
3.) Eintreiben eines Spreizelements in den Spreizabschnitt, wodurch der Spreizabschnitt verspreizt und der Dämmstoffdübel im Verankerungsgrund verankert wird, wobei der Halteabschnitt an oder in der Dämmstoffplatte liegt.

Durch diese Schritte wird der Dämmstoffdübel gesetzt, wobei die Schritte 2 und 3 nacheinander oder gleichzeitig erfolgen können. Nachdem der Setzvorgang mit dem Verfahrensschritt 3 abgeschlossen und der Spreizabschnitt planmäßig verspreizt und verankert ist, wird erfindungsgemäß zudem folgender Verfahrensschritt durchgeführt:
4.) Aufbringen einer äußeren axialen Druckkraft als Prüflast auf den gesetzten Dämmstoffdübel, insbesondere auf das Spreizelement, derart, dass die Druckkraft bei planmäßiger Verankerung des Dämmstoffdübels im Verankerungsgrund vom Spreizabschnitt auf dem Verankerungsgrund übertragen wird, im Wesentlichen ohne dass sich der Spreizabschnitt mit dem Spreizelement in axialer Richtung bewegt.

Mit "axial" ist die Längsrichtung des Dämmstoffdübels gemeint, die insbesondere der Einbringrichtung entspricht, in der der Dämmstoffdübel in das Bohrloch eingebracht wird. Die im Verfahrensschritt 4 als Prüflast aufgebrachte axiale Druckkraft ist dabei insbesondere größer, als die durch den Anwender in den vorangegangenen Verfahrensschritten 2 und 3 bei der Montage des Dämmstoffdübels, also beim Einbringen des Spreizabschnitts und beim Eintreiben des Spreizelements aufgebrachten Druckkräfte, die in axialer Richtung wirken. Insbesondere wird der Dämmstoffdübel nach Abschluss des Setzvorgangs zunächst bewusst entlastet, das heißt, der Anwender übt nur eine geringe, insbesondere keine axial wirkende Druckkraft auf den Dämmstoffdübel aus. Erst nach dem Entlasten wird vom Anwender bewusst der Verfahrensschritt 4 durchgeführt und die axiale Druckkraft auf den gesetzten Dämmstoffdübel aufgebracht.

Wenn der Dämmstoffdübel planmäßig im Verankerungsgrund verankert ist, so wird die im Verfahrensschritt 4 auf den Dämmstoffdübel ausgeübte axiale Druckkraft über den gegen die Bohrlochwand gepressten Spreizabschnitt in den Verankerungsgrund übertragen, wobei sich der Dämmstoffdübel dabei in axialer Richtung im Wesentlichen nicht bewegt. "Im Wesentlichen" bedeutet hier, dass außer einer elastischen Stauchung des Materials des Dübels keine zusätzliche Bewegung des Dämmstoffdübels in Einbringrichtung erfolgt. Insbesondere wird die axiale Druckkraft direkt auf das Spreizelement aufgebracht und über das Spreizelement auf den Spreizabschnitt übertragen. Falls eine Kraftübertragung zwischen dem radial aufgespreizten Spreizabschnitt und der Bohrlochwand nicht planmäßig möglich ist, so bewegt sich der Dämmstoffdübel unter der Wirkung der axialen Druckkraft in Einbringrichtung zum Verankerungsgrund hin, was der Anwender bemerkt. Dabei wird der Spreizabschnitt mit dem Spreizelement in axialer Richtung bewegt, wobei der Dämmstoff gestaucht werden kann. Hierdurch wird dem Anwender signalisiert, dass der Spreizbereich nicht planmäßig verankert ist und dass axial wirkende Kräfte nicht in ausreichender Größe auf den Verankerungsgrund übertragen werden können. Durch das erfindungsgemäße Verfahren ist es dem Anwender auf einfache Art und Weise möglich zu prüfen, ob der Dämmstoffdübel planmäßig verankert ist oder nicht.

Vorzugsweise wird die axiale Druckkraft im Verfahrensschritt 4 mittels eines Werkzeugs, das zum Eintreiben des Spreizelements verwendet wird, auf den Dämmstoffdübel aufgebracht, insbesondere unmittelbar auf das Spreizelement. Beispielsweise handelt es sich bei dem Werkzeug um einen Bit eines Akkuschraubers, der in eine Aufnahme eingreift, um ein als Schraube ausgebildetes Spreizelement einzuschrauben. Zum Durchführen des Verfahrensschritts 4 muss der Anwender somit kein spezielles Werkzeug verwenden und einen Wechsel des Werkzeugs durchführen, so dass der Verfahrensschritt 4 zeitnah auf die Verfahrensschritte 1 bis 3 folgen kann.

Weiterhin ist bevorzugt, dass der Dämmstoffdübel ein Anschlagelement zur Anlage am Verankerungsgrund oder einer festen Zwischenschicht zwischen dem Verankerungsgrund und der Dämmstoffplatte aufweist. Die Zwischenschicht kann beispielsweise eine mineralische Kleberschicht sein, mit der die Dämmstoffplatte mit dem Verankerungsgrund verklebt wurde. Das Anschlagelement signalisiert beispielsweise dem Anwender im Verfahrensschritt 2, dass der Spreizabschnitt ausreichend weit in das Bohrloch eingeführt ist. Dies ist beispielsweise der Fall, wenn das Anschlagelement auf den Verankerungsgrund oder die Zwischenschicht trifft. Dann wird das Einbringen gestoppt, da das Anschlagelement am Verankerungsgrund beziehungsweise der Zwischenschicht ansteht. Um den Verfahrensschritt 4 zu ermöglichen, ist das Anschlagelement derart gestaltet, dass es durch das Aufbringen der axialen Druckkraft axial nachgibt, wenn der Dämmstoffdübel durch die Druckkraft in axialer Richtung bewegt wird, was der Fall ist, wenn der Spreizabschnitt nicht ausreichend im Verankerungsgrund verankert ist. Dabei ist die axiale Druckkraft, bei der das Anschlagelement nachgibt, geringer als die axiale Druckkraft, die als Prüflast auf den Dämmstoffdübel aufgebracht wird. Durch das Nachgeben wird verhindert, dass die als Prüflast wirkende axiale Druckkraft vom Anschlagelement auf den Verankerungsgrund oder die Zwischenschicht übertragen wird, was beim Anwender fälschlicherweise den Eindruck erwecken würde, dass der Dämmstoffdübel planmäßig verankert ist.

Vorzugsweise weist das Anschlagelement eine Materialschwächung auf, um die axiale Nachgiebigkeit zu erreichen. Vorzugsweise ist das Anschlagelement aufgrund der Materialschwächung derart gestaltet, dass das Anschlagelement durch die Druckkraft gestaucht wird und/oder knickt. Insbesondere ist das Anschlagelement als Knickelement ausgestaltet, das über eine Spritzhaut, die die Materialschwächung darstellt, mit einem Schaftbereich des Dämmstoffdübels verbunden ist. Die Spritzhaut stabilisiert das Knickelement derart, dass es seine Funktion als Anschlag erfüllen kann und nicht schon dann ausknickt, wenn es beim Einbringen des Dämmstoffdübels auf den Verankerungsgrund trifft. Wird nach dem Setzen des Dämmstoffdübels eine bestimmte axiale Druckkraft überschritten, so reißt die Spritzhaut und das Knickelement wird instabil und knickt aus. Dies ist dann der Fall, wenn die im Verfahrenschritt 4 auf den Dämmstoffdübel aufgebrachte axiale Druckkraft nicht vom verspreizten Spreizbereich auf den Verankerungsgrund übertragen werden kann und der Dämmstoffdübel sich somit unter Wirkung der Druckkraft axial in Einbringrichtung bewegt.

Weiterhin ist bevorzugt, dass der Halteabschnitt ein Dämmstoffgewinde zum Einschrauben in die Dämmstoffplatte aufweist, so dass das Halteelement in die Dämmstoffplatte versenkt werden kann, wodurch eine Wärmebrücke vermieden wird.

Vorzugsweise erfolgt das Einschrauben des Dämmstoffgewindes gleichzeitig mit dem Eintreiben des Spreizelements, so dass eine schnelle und wirtschaftliche Montage möglich ist.

Das erfindungsgemäße Verfahren wird nachfolgend anhand von zwei in den Figuren dargestellten Ausführungsbeispielen näher erläutert.

Es zeigen:
- Figur 1: eine an einem Verankerungsgrund angebrachte Dämmstoffplatte nach dem Bohren eines Bohrlochs in einer Seitenansicht;
- Figur 2: einen in das Bohrloch eingebrachten Dämmstoffdübel in einer Seitenansicht;
- Figur 3: ein Anschlagelement des Dämmstoffdübels aus Figur 2 in einer Detaildarstellung;
- Figur 4: den Dämmstoffdübel nach dem Setzen beim Aufbringen einer axialen Druckkraft in einer Seitenansicht;
- Figur 5: eine Anordnung wie in Figur 3, wobei das Bohrloch Abplatzungen aufweist; und
- Figur 6: ein Anschlagelement des Dämmstoffdübels aus Figur 5 in einer Detaildarstellung.

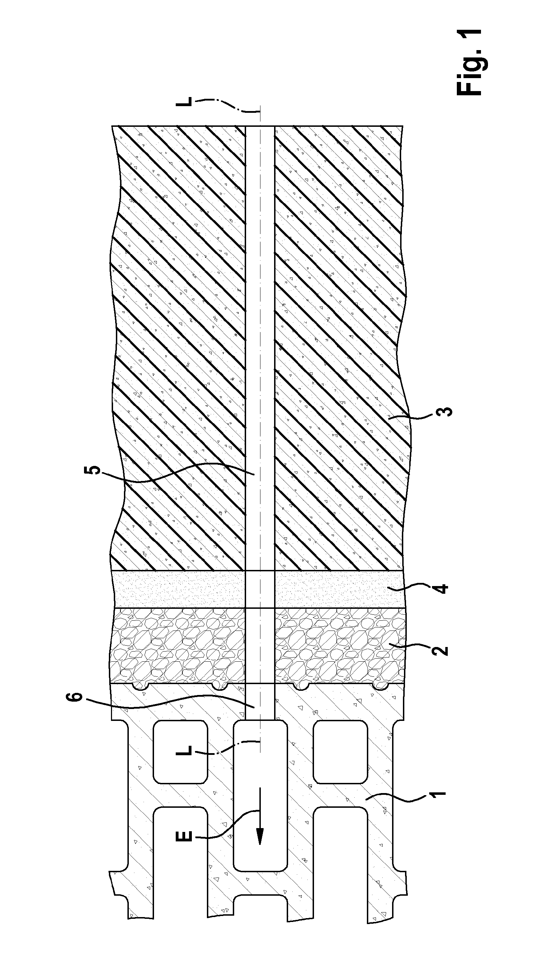

Die Figur 1 zeigt einen Verankerungsgrund 1, bestehend aus Hochlochziegeln, auf dem eine Altputzschicht 2 aufgebracht ist. Der Verankerungsgrund 1 bildet eine Wand eines nicht näher dargestellten Gebäudes. Zur Verbesserung der Wärmedämmung des Gebäudes ist auf der Altputzschicht 2 eine Dämmstoffplatte 3 angeordnet, die mit einer Kleberschicht 4 auf die Altputzschicht 2 geklebt ist. Um die Dämmstoffplatte 3 zusätzlich mechanisch mit dem Verankerungsgrund 1 verbinden zu können, wurde eine Durchgangsbohrung 5 durch die Dämmstoffplatte 4, die Kleberschicht 3 und die Altputzschicht 2 hindurch und ein Bohrloch 6 im Verankerungsgrund 1 erstellt. Die Durchgangsbohrung 5 und das Bohrloch 6 erstrecken sich axial entlang einer Längsachse L, wobei das Bohrloch 6 in Einbringrichtung E vor der Durchgangsbohrung 5 liegt.

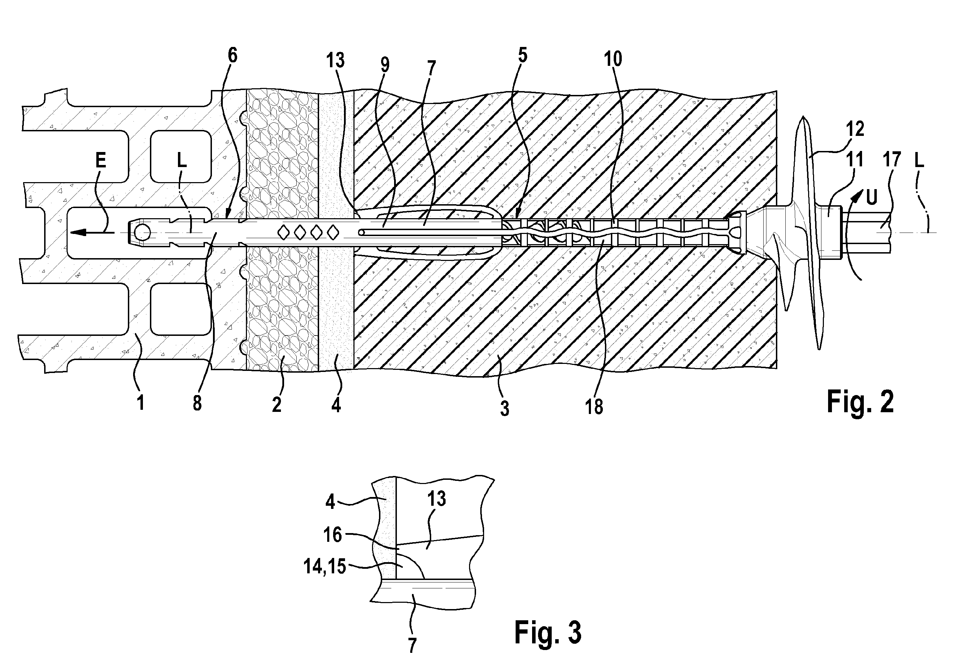

In Figur 2 ist die Anordnung der Figur 1 mit einem Dämmstoffdübel 7 dargestellt, der in die Durchgangsbohrung 5 und das Bohrloch 6 eingebracht worden ist. Der Dämmstoffdübel 7 weist einen Spreizabschnitt 8 auf, mit dem der Dämmstoffdübel 7 im Verankerungsgrund 1 verankert werden kann. Der Dämmstoffdübel 7 weist in Einbringrichtung E hinter dem Spreizabschnitt 8 einen hülsenartigen Schaftabschnitt 9 mit einer gitterartigen Stauchzone 10 auf, an dessen hinterem Ende ein Halteabschnitt 11 mit einem Dämmstoffgewinde 12 drehbar angeordnet ist. Der Dämmstoffdübel 1 ist so weit in die Durchgangsbohrung 5 und das Bohrloch 6 eingebracht worden, bis ein Anschlagelement 13 an der Kleberschicht 4 anliegt, was dem Anwender signalisiert, dass der Spreizabschnitt 8 ausreichend weit in das Bohrloch 6 eingebracht wurde. Das Anschlagelement 13 ist als flügelartig, radial abstehende Anschlagschulter ausgeführt, mit einer Materialschwächung 14 in Form eines Viertelkreises (vgl. Figur 3). Im Bereich der Materialschwächung 14 ist die Wandstärke des Anschlagelements 13 derart reduziert, dass dieser Bereich des Anschlagelements 13 nur noch eine dünne Spritzhaut 15 bildet. Der übrige Bereich des Anschlagelements 13 bildet einen Stützfuß 16, der das Anschlagelement 13 an der Kleberschicht 4 abstützt. Da die Spritzhaut 15 als Zugband wirkt, verhindert sie, dass der Stützfuß 16 ausknickt, wenn die Anschlagschulter 13 nach dem Einbringen des Spreizabschnitts 8 in das Bohrloch 6 auf die Kleberschicht 4 trifft.

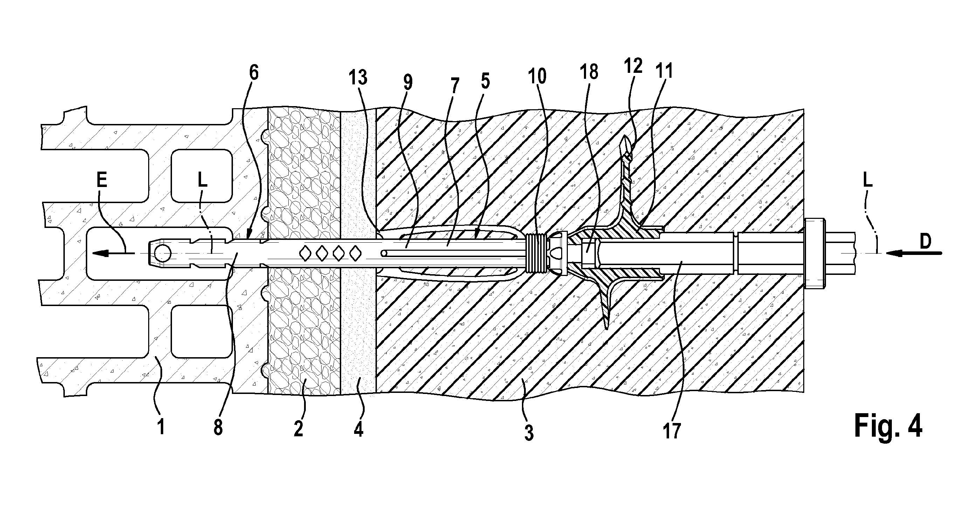

Der Halteabschnitt 11 weist eine Aufnahme für ein Werkzeug 17 auf, mit dem der Halteabschnitt 11 in Umfangsrichtung U gedreht werden kann, so dass das Dämmstoffgewinde 12 in die Dämmstoffplatte 3 schneidet. Am Halteabschnitt 11 ist zudem ein Spreizelement 18 in Form einer Schraube angeordnet, das vom Halteabschnitt 11 aus in Einbringrichtung E durch die Stauchzone 10 hindurch bis in den Spreizabschnitt 8 ragt. Das Spreizelement 8 bewegt sich beim Einschneiden des Dämmstoffgewindes 12 in die Dämmstoffplatte 3 mit dem Halteabschnitt 11 in Richtung der Einbringrichtung E, wodurch das Spreizelement 18 in den Spreizabschnitt 8 eingetrieben, der Spreizabschnitt 8 radial verspreizt und der Dämmstoffdübel 7 im Verankerungsgrund 1 verankert wird. Hierbei wird die Stauchzone 10 in axialer Richtung gestaucht, so dass sie im gestauchten Zustand eine kurze, geschlossene Hülse bildet, wie dies in Figur 4 zu sehen ist.

Figur 4 zeigt den Dämmstoffdübel 7 nach dem Setzen. Zum Überprüfen, ob der Dämmstoffdübel 7 fest im Verankerungsgrund 1 verankert ist, wird nun vom Anwender mit dem Werkzeug 17 eine axiale Druckkraft D als Prüflast in Richtung der Längsachse L auf das Spreizelement 18 aufgebracht. Die als Prüflast wirkende axiale Druckkraft D ist dabei größer als axiale Durckkräfte, die bei der zuvor beschriebenen Montage des Dämmstoffdübels 7 auf den Dämmstoffdübel 7 aufgebracht wurden. Da der in Figur 4 dargestellte Dämmstoffdübel 7 planmäßig im Verankerungsgrund 1 verankert ist, wird die Druckkraft vom Spreizelement 18 über den verspreizten Spreizabschnitt 8 und die Wand des Bohrlochs 6 auf den Verankerungsgrund 1 übertragen, ohne dass der Spreizabschnitt 8 des Dämmstoffdübels 7 mit dem Spreizelement 18 sich für den Anwender bemerkbar in axialer Richtung, also in Richtung der Längsachse L, zum Verankerungsgrund 1 hin bewegt. Der Anwender bekommt somit die Rückmeldung, dass der Dämmstoffdübel 7 planmäßig im Verankerungsgrund 1 verankert ist.

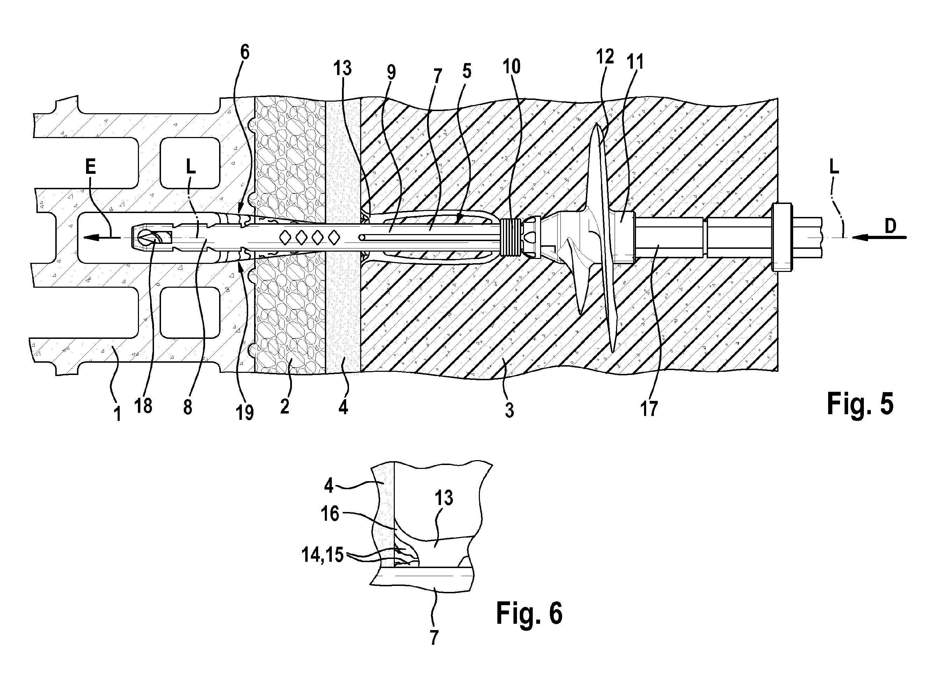

Dagegen ist in Figur 5 eine Situation dargestellt, in der der Dämmstoffdübel 7 nicht planmäßig im Verankerungsgrund 1 verankert werden kann, da das Bohrloch 6 im Bereich des Bohrlochmundes durch Abplatzungen 19 stark radial geweitet ist. Der Dämmstoffdübel 1 ist zwar planmäßig gesetzt und montiert, eine Übertragung von Kräften vom gespreizten Spreizabschnitt 8 auf die Wand des Bohrlochs 6 ist aber nicht möglich, da aufgrund der Abplatzungen 19 kein Reibschluss zwischen der Wand des Bohrlochs 6 und dem Spreizabschnitt 8 des Dämmstoffdübels 7 möglich ist. Die vom Anwender über das Werkzeug 17 auf den Dämmstoffdübel 7 aufgebrachte axiale Druckkraft D wird somit vom Anschlagelement 13 aufgenommen, wobei der Stützfuß 16 auf Grund der als Prüflast wirkenden Druckkraft D radial nach außen knickt, wodurch die stabilisierende Spritzhaut 15 reißt, so dass der Dämmstoffdübel 7 merklich axial in Richtung der Einbringrichtung E bewegt wird. Das Anschlagelement 13 gibt durch das Aufbringen der Druckkraft D axial nach, wenn der Dämmstoffdübel 7 durch die Druckkraft D in axialer Richtung bewegt wird. Der Anwender bekommt somit die Rückmeldung, dass der Dämmstoffdübel 7 nicht planmäßig im Verankerungsgrund 1 verankert ist. Obwohl nach dem Knicken des Stützfußes 16 eine axiale Bewegung des Dämmstoffdübels 7 möglich ist, verhindert das Anschlagelement 13, dass der Dämmstoffdübel 7 so weit in die Dämmstoffplatte 3 eindringt, dass das Dämmstoffgewinde 12 des Halteelements 11 die Dämmstoffplatte 3 beschädigt.

**Bezugszeichenliste**

| | **Verfahren zum Befestigen einer Dämmstoffplatte an einem Verankerungsgrund** |
|---|---|
| 1 | Verankerungsgrund |
| 2 | Altputzschicht |
| 3 | Dämmstoffplatte |
| 4 | Kleberschicht |
| 5 | Durchgangsbohrung |
| 6 | Bohrloch |
| 7 | Dämmstoffdübel |
| 8 | Spreizabschnitt |
| 9 | Schaftabschnitt |
| 10 | Stauchzone |
| 11 | Halteabschnitt |
| 12 | Dämmstoffgewinde |
| 13 | Anschlagelement |
| 14 | Materialschwächung |
| 15 | Spritzhaut |
| 16 | Stützfuß |
| 17 | Werkzeug |
| 18 | Spreizelement |
| 19 | Abplatzung |
| D | axiale Druckkraft |
| E | Einbringrichtung |
| L | Längsachse |
| U | Umfangsrichtung |

## Patentansprüche

1. Verfahren zum Befestigen einer Dämmstoffplatte (3) an einem Verankerungsgrund (1) mit einem Dämmstoffdübel (7), der einen Spreizabschnitt (8) zum Verankern des Dämmstoffdübels (7) im Verankerungsgrund (1) und einen Halteabschnitt (11) zum Halten der Dämmstoffplatte (3) aufweist,
wobei das Verfahren folgende Schritte umfasst:
1.) Bohren eines Bohrlochs (6) in den Verankerungsgrund (1);
2.) Einbringen des Spreizabschnitts (8) in das Bohrloch (6), und
3.) Eintreiben eines Spreizelements (18) in den Spreizabschnitt (8), wodurch der Spreizabschnitt (8) verspreizt und der Dämmstoffdübel (7) im Verankerungsgrund (1) verankert wird, wobei der Halteabschnitt (11) an oder in der Dämmstoffplatte (3) liegt;
**gekennzeichnet durch** den nachfolgenden Schritt:
4.) Aufbringen einer äußeren axialen Druckkraft (D) als Prüflast auf den gesetzten Dämmstoffdübel (7), derart, dass die Druckkraft (D) bei planmäßiger Verankerung des Dämmstoffdübels (7) im Verankerungsgrund (1) vom Spreizabschnitt (8) auf den Verankerungsgrund (1) übertragen wird, im Wesentlichen ohne dass sich der Spreizabschnitt (8) mit dem Spreizelement in axialer Richtung bewegt.

2. Verfahren nach Anspruch 1, **dadurch gekennzeichnet, dass** die Druckkraft (D) mittels eines Werkzeugs (17), das zum Eintreiben des Spreizelements (18) verwendet wird, auf den Dämmstoffdübel (7) aufgebracht wird.

3. Verfahren nach Anspruch 1 oder 2, **dadurch gekennzeichnet, dass** die Druckkraft (D) unmittelbar auf das Spreizelement (18) aufgebracht wird.

4. Verfahren nach einem der Ansprüche 1 bis 3, **dadurch gekennzeichnet, dass** der Dämmstoffdübel (7) ein Anschlagelement (13) zur Anlage am Verankerungsgrund (1) aufweist, das durch Aufbringen der Druckkraft (D) axial nachgibt, wenn der Dämmstoffdübel (7) durch die Druckkraft (D) in axialer Richtung bewegt wird.

5. Verfahren nach Anspruch 4, **dadurch gekennzeichnet, dass** das Anschlagelement (13) eine Materialschwächung (14) aufweist.

6. Verfahren nach Anspruch 4 oder 5, **dadurch gekennzeichnet, dass** das Anschlagelement (13) durch die Druckkraft (D) gestaucht wird und/oder knickt.

7. Verfahren nach einem der Ansprüche 1 bis 6, **dadurch gekennzeichnet, dass** der Halteabschnitt (11) ein Dämmstoffgewinde (12) zum Einschrauben in die Dämmstoffplatte (3) ist.

8. Verfahren nach Anspruch 7, **dadurch gekennzeichnet, dass** das Einschrauben des Dämmstoffgewindes (12) gleichzeitig mit dem Eintreiben des Spreizelements (18) erfolgt.
